# FASCICULE DE BREVET EUROPEEN

(11) **EP 3 676 227 B1**
(45) Date de publication et mention de la délivrance du brevet: **11.11.2026**
(21) Numéro de dépôt: 18759615.0
(22) Date de dépôt: 23.08.2018
(51) Int. Cl.: C02F 1/32, C02F 1/72, C02F 101/12

(54) **PROCÉDÉ DU TRAITEMENT DE L'EAU**
WASSERBEHANDLUNGSVERFAHREN
WATER TREATMENT PROCESS

(30) Priorité: 31.08.2017 FR 1700885
(43) Date de publication de la demande: 08.07.2020
(73) Titulaire: Solable SAS, 13410 Lambesc (FR)
(72) Inventeur: BRAHMI, Saadi, 13410 Lambesc (FR); NUTI, Pascal, 13590 Meyreuil (FR)
(74) Mandataire: Poindron, Cyrille
(86) Numéro de dépôt international: PCT/EP2018/072827
(87) Numéro de publication internationale: WO 2019/042870

(56) Documents cités:
- WO-A1-2008/156813
- WO-A1-2016/016603
- WO-A1-2016/108459
- WO-A2-2011/057015
- DE-A1- 102010 005 893
- JP-A- 2017 051 887
- JP-A- H09 940
- US-A1- 2013 134 104
- MCCLEAN JON: "Using UV for dechlorination", 1 November 2007 (2007-11-01), XP093243356, Retrieved from the Internet <URL:https://img.wwdmag.com/files/base/ebm/wwdmag/document/2022/06/1655271513600-usinguv.pdf>

## Description

La présente invention concerne un procédé pour le traitement d'eau chlorée.

Le marché de l'eau potable est largement dominé par les traitements chlorés, seuls à combiner prix réduit et rémanence suffisante de désinfection pour affronter les longs réseaux de distribution. Dans certains pays (par exemple aux USA), les taux de chlore admis dans l'eau sont très élevés (0.8mg /l contre 0.4mg/l en Europe), de l'ordre de 1mg/l dans l'eau distribuée au réseau.

Le chlore possède plusieurs inconvénients, dont la création de sous-produits dangereux (chloramines (composés chimiques caractérisés par le groupement -N-Cl), Trihalogénométhane, chloroforme etc, ...), et ces traitement chlorés possèdent un autre inconvénient : si le chlore ne sent pas très bon, son gout reste limité, les chloramines sont très odorantes et induisent un gout prononcé (et fort désagréable), qui ne disparait pas au bout d'une heure de mise à l'air. Contrairement à certaines idées reçues, une eau qui contient des chloramines peut demander au moins 24H d'aération pour une réduction partielle, ce qui laisserait la place à une recolonisation microbienne en cas de pratique.

Il est connu dans l'art antérieur des dispositifs de traitement, tels que les carafes filtrantes, mais comme vu ci-dessus, il faudrait laisser l'eau y stagner un long moment, ce qui peut provoquer des contaminations bactériennes, et de plus, de tels carafes filtrantes peuvent retenir des sels minéraux ou oligo-éléments pourtant bénéfiques pour le consommateur.

Les solutions à base d'osmose inverse créent une eau quasi distillée, qui manque des sels minéraux essentiels, elles sont de plus couteuses en énergie et requièrent plus de consommables que les carafes filtrantes.

L'ultrafiltration et la microfiltration sont inopérants sur le chlore dissous, ainsi bien sur que sur ses dérivés.

Enfin, Les purificateurs à ultraviolet (UV-C) sont efficaces sur les bactéries, et peuvent dans une certaine mesure abattre le chlore (sous réserve d'une dose d'UV-C vingt fois plus importante...). Ces appareils sont soumis à un changement de lampe annuel (que l'on ne doit pas éteindre pour la préserver...), et leur longueur d'onde, efficace sur le chlore, l'est moins sur les chloramines. Les lampes jetables utilisent le mercure abondamment, ce qui procure un inconvénient supplémentaire. Quelques documents pertinents sont WO 2011/057015 A2, WO 2008/156813 A1, JP H09 940 A, WO 2016/016603 A1, DE 10 2010 005893 A1, JP 2017 051887 A, WO 2016/108459 A1, US 2013/134104 A1, Mcclean Jon: "Using UV for dechlorination",, 1 novembre 2007 (2007-11-01), XP093243356,Extrait de l'Internet:URL: https:// img.wwdmag.com/files/base/ebm/wwdmag/document/2022/06/1655271513600-usinguv.pdf.

Un but de la présente invention est de répondre aux inconvénients des documents de l'art antérieur mentionnés ci-dessus et en particulier, tout d'abord, de proposer un procédé de traitement de l'eau chlorée simple, qui n'a pas d'incidence sur les oligo-éléments, et qui peut rapidement traiter un volume d'eau à consommer pour lui retirer le goût désagréable du chlore et de ses dérivés.

Pour cela l'invention est définie par la revendication 1.

Un aspect de la divulgation non couvert par les revendications concerne un appareil de traitement d'eau chlorée, comprenant un réservoir, agencé pour recevoir un volume prédéterminé d'eau chlorée à traiter,
caractérisé en ce que l'appareil de traitement comprend au moins une source lumineuse agencée pour exposer le volume prédéterminé à un rayonnement ultraviolet d'une longueur d'onde comprise dans un intervalle allant de 320 nm à 400 nm et préférentiellement de 325 nm à 395 nm. Un tel appareil de traitement est simple à fabriquer, et permet un traitement rapide et efficace du volume prédéterminé pour retirer le goût du chlore à l'eau chlorée initialement introduite dans le réservoir qui est fermé pendant le traitement. La dite au moins une source lumineuse est agencée pour générer des rayons ultraviolet de type A, c'est-à-dire dont la longueur d'onde est comprise entre 320 nm (nanomètres) et 400 nm (nanomètres) et préférentiellement entre 325 nm et 395 nm. L'architecture générale de l'appareil est simple : il suffit d'un réservoir (amovible ou non), et de sources lumineuses pour exposer le contenu du réservoir aux rayons UV (de type A).

En particulier, l'appareil est dépourvu de filtre, de cartouche filtrante ou micro filtrante. Les oligo-éléments ne sont donc pas retenus par un tel filtre.

En particulier, l'appareil est dépourvu de moyens de génération et circulation d'ozone séparés, pour faire circuler de l'ozone gazeux dans le réservoir.

Autrement dit, le fonctionnement de base de l'appareil vise uniquement à exposer l'eau à un rayonnement ultraviolet. Ainsi, l'exposition aux rayons ultraviolet provoque une disparition de l'odeur chlorée. L'exposition de l'eau à uniquement un rayonnement ultraviolet permet de traiter les molécules malodorantes. En d'autres termes, un aspect de la divulgation non couvert par les revendications propose un appareil qui permet de faire disparaitre l'odeur chlorée uniquement en exposant l'eau dans un récipient fermé avec un rayonnement UV particulier, et ceci donc sans filtration, sans exposition à de l'ozone, ou sans utilisation de photo-catalyseur.

En particulier, le chlore dans l'eau du robinet est présent notamment sous la forme d'acide hypochloreux (HClO) et d'ions hypochlorites (ClO⁻), et l'action du rayonnement UV provoque un abattement de ces molécules chlorées, en générant des radicaux libres :

HOCI + rayonnement UV → ^{·}OH + Cl^{·}

ClO⁻ + rayonnement UV → O^{-·} + Cl^{·}

Ainsi, les radicaux libres générés peuvent ensuite détruire (par oxydation, ou processus d'oxydation avancée) les autres molécules, et d'éventuels virus ou bactéries présents dans la solution en traitement.

Avantageusement, l'appareil de traitement comprend un boîtier et une pluralité de sources lumineuses agencées dans le boîtier pour exposer le volume prédéterminé à un rayonnement lumineux d'une longueur d'onde comprise dans un intervalle allant de 320 nm à 400 nm et préférentiellement de 325 nm à 395 nm, et l'appareil de traitement comprend des moyens de refroidissement agencés pour refroidir les sources lumineuses, et des moyens de commutation, agencés pour couper les moyens de refroidissement de sorte à provoquer un échauffement interne du boîtier et du volume prédéterminé d'eau. L'appareil de traitement utilise la chaleur créée par les sources lumineuses pour pasteuriser en plus le volume d'eau à traiter. On peut envisager de porter à au moins 57°C, ou plus préférentiellement au moins 60°C le volume d'eau à traiter. Une fois encore, un aspect de la divulgation non couvert par les revendications propose un appareil qui permet de faire disparaitre l'odeur chlorée uniquement en exposant l'eau dans un récipient fermé avec un rayonnement UV particulier, et ceci donc sans filtration, sans exposition à de l'ozone, ou sans utilisation de photo-catalyseur, mais la mise en œuvre ci-dessus tire avantageusement parti de la chaleur générée par les sources de lumière pour pasteuriser l'eau stockée dans le récipient fermé.

Alternativement, l'appareil de traitement comprend un boîtier et une pluralité de sources lumineuses agencées dans le boîtier pour exposer le volume prédéterminé à un rayonnement lumineux d'une longueur d'onde comprise dans un intervalle allant de 320 nm à 400 nm et préférentiellement de 325 nm à 395 nm, et l'appareil de traitement comprend des moyens de ventilation agencés pour provoquer un flux d'air au niveau des sources lumineuses, et des moyens de recirculation, agencés pour faire fonctionner les moyens de ventilation en circuit fermé ou pas, de sorte à respectivement provoquer un échauffement interne du boîtier et du volume prédéterminé d'eau ou à refroidir les sources lumineuses. L'appareil de traitement utilise la chaleur créée par les sources lumineuses pour pasteuriser le volume d'eau à traiter. On peut envisager de porter à au moins 57°C, ou plus préférentiellement à au moins 60°C le volume d'eau à traiter. Une fois encore, un aspect de la divulgation non couvert par les revendications propose un appareil qui permet de faire disparaitre l'odeur chlorée uniquement en exposant l'eau dans un récipient fermé avec un rayonnement UV particulier, et ceci donc sans filtration, sans exposition à de l'ozone, ou sans utilisation de photo-catalyseur, mais la mise en œuvre ci-dessus tire avantageusement parti de la chaleur générée par les sources de lumière pour pasteuriser l'eau stockée dans le récipient fermé.

Très avantageusement, ladite au moins une source lumineuse est une diode électroluminescente.

En particulier ladite au moins une source lumineuse est une diode électroluminescente choisie pour émettre ou générer un rayonnement ultraviolet de longueur d'onde de 365 nm ± 15 nm et préférentiellement de 365 nm ± 10 nm.

Avantageusement, le réservoir est amovible.

Avantageusement, le réservoir est transparent aux rayons ultraviolets d'une longueur d'onde comprise dans un intervalle allant de 320 nm à 400 nm et préférentiellement de 325 nm à 395 nm.

Avantageusement, ladite au moins une source lumineuse est une diode électroluminescente comprenant une tête émettrice de lumière, et dans lequel le réservoir est en contact avec la tête émettrice de lumière. Cela permet de transférer directement de la chaleur vers le réservoir (pour refroidir les diodes électroluminescentes, et/ou pour chauffer l'eau à traiter).

Avantageusement, le réservoir est réalisé en verre borosilicate.

Avantageusement, l'appareil de traitement comprend une pluralité de barrettes agencées autour du réservoir, chaque barrette supportant plusieurs sources lumineuses agencées le long du réservoir.

Avantageusement, l'appareil de traitement comprend des moyens élastiques agencés pour pousser chacune de la pluralité de barrettes contre le réservoir. Cela garantit un bon contact thermique.

Avantageusement, l'appareil de traitement comprend une enveloppe externe opaque aux rayons ultraviolet, entourant le volume prédéterminé d'eau et ladite au moins une source lumineuse agencée pour générer le rayonnement ultraviolet.

Avantageusement, l'appareil de traitement comprend une paroi réfléchissante au rayons ultraviolet, entourant le volume prédéterminé d'eau et ladite au moins une source lumineuse agencée pour générer le rayonnement ultraviolet.

L'invention concerne un procédé de traitement d'eau chlorée, comprenant une étape consistant à exposer un volume prédéterminé d'eau chlorée à un rayonnement ultraviolet d'une longueur d'onde comprise dans un intervalle allant de 320 nm à 400 nm et préférentiellement de 325 nm à 395 nm.

Avantageusement, le procédé comprend une étape consistant à chauffer le volume prédéterminé d'eau à une température au moins égale à 60°C, simultanément à l'étape d'exposition du volume prédéterminé d'eau chlorée au rayonnement ultraviolet.

Avantageusement, la chaleur de chauffage est générée par les sources lumineuses qui génèrent le rayonnement ultraviolet. Selon une mise en œuvre particulièrement intéressante, il n'y a pas de moyens de chauffage autre que les sources lumineuses qui génèrent le rayonnement ultraviolet

Selon l'invention, l'étape d'exposition du volume prédéterminé au rayonnement ultraviolet est effectuée suffisamment longtemps pour fournir au moins 5.5Wh d'énergie lumineuse par litre d'eau à traiter.

En d'autres termes, un aspect de la divulgation non couvert par les revendications 'concerne l'utilisation de l'appareil de traitement selon le premier aspect, ou l'utilisation du procédé de traitement selon le deuxième aspect, pour traiter du chlore ou ses dérivés présents dans de l'eau chlorée. Cette eau chlorée ne contient pas ou peu de microbes ou bactéries (et ne doit donc pas être désinfectée à nouveau avant d'être consommée), mais présente une odeur ou un gout peu agréables, que l'appareil de traitement, ou le procédé de traitement peuvent faire disparaître en un temps court. En effet, le demandeur s'est aperçu qu'une exposition au rayonnement UV de type A permet de faire disparaître le goût ou l'odeur de chlore. Les molécules odorantes (chlore, chlore actif, et surtout chloramines...) sont cassées pour générer des radicaux libres et ensuite des ions qui ne présentent pas l'odeur caractéristique du chlore.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

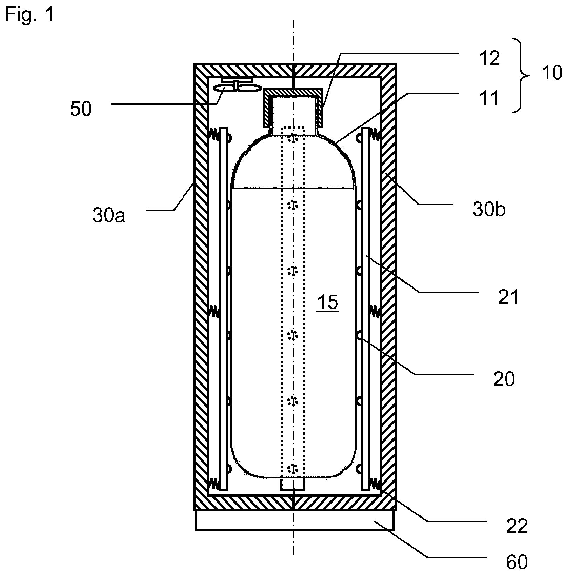

- la figure 1 représente une vue en coupe d'un appareil de traitement d'eau prévu pour mettre en œuvre le procédé selon l'invention.

La figure 1 représente une vue en coupe d'un appareil de traitement d'eau chlorée, qui comprend un boîtier 30 (formé ici par deux demi-boitiers 30a et 30b) un réservoir 10 formé par une bouteille 11 et un bouchon 12, de sorte à former un volume fermé, une pluralité de diodes électroluminescentes 20 embarquées sur des barrettes 21.

Les diodes électroluminescentes 20 sont agencées pour émettre un signal lumineux dans le domaine ultraviolet, et en particulier les diodes électroluminescentes 20 sont prévues pour émettre des rayons ultraviolet de type A (autrement appelés UV-A). Les diodes électroluminescentes 20 sont donc agencées pour émettre un signal lumineux dont la longueur d'onde est comprise dans un intervalle allant de 320 nm à 400 nm et préférentiellement de 325 nm à 395 nm.

Le boîtier peut accueillir de manière temporaire le réservoir 10 contenant de l'eau chlorée 15 (il suffit de séparer les deux demi-boitiers 30a et 30b). Comme le montre la figure 1, les diodes électroluminescentes 20 sont en contact avec le réservoir 10 car des ressorts 22 poussent les barrettes 21 et les diodes électroluminescentes 20 vers le réservoir 10. Cela permet de provoquer une conduction de chaleur depuis les diodes électroluminescentes 20 vers le réservoir 10.

L'appareil de traitement comprend aussi des moyens de ventilation 50 qui provoquent un flux d'air dans l'enceinte fermée. On peut prévoir de faire fonctionner les moyens de ventilation 50 en circuit ouvert (pour refroidir les diodes électroluminescentes 20) ou en circuit fermé (pour faire chauffer le réservoir 10 et l'eau 15). On peut aussi prévoir d'éteindre les moyens de ventilation 50 pour faire chauffer le réservoir 10 et l'eau 15, et les allumer pour refroidir les diodes électroluminescentes 20.

Enfin, l'appareil de traitement comprend une unité de commande électrique 60 pour piloter les diodes électroluminescentes 20, les moyens de ventilation 50 selon le cycle de traitement. On peut prévoir une alimentation externe sur secteur, ou alors une batterie pour obtenir un appareil nomade.

Par une autre série d'essais, le demandeur a établi que la longueur d'onde utile pour ce travail se situe entre 320 nm et 400 nm et préférentiellement entre 325 et 390nm. Ainsi, pour une bouteille de 1l, représentant environ 600cm² de surface déroulée, il faut une quantité d'UV-A reçue d'environ 5,5 Wh, soit l'équivalent de deux heures de plein soleil.

En fabriquant une boite, et posant des séries de diodes électroluminescentes 20 autour de la bouteille 11 posée à l'intérieur, on peut utiliser une puissance par exemple quatre fois plus grande (11W) pour arriver à traiter ce même litre d'eau en 30 minutes.

Mais l'effet ne se contente pas de supprimer le chlore et ses dérivés : il génère énormément de radicaux hydroxyle, du H2O2, de l'O3, qui procèdent ainsi à une stérilisation de l'eau par triple processus d'oxydation avancée (l'un seul de ces procédés permettrait à lui seul de stériliser le contenu sans difficulté)

De plus, l'appareil utilise avantageusement une propriété du rayonnement UVA qui est germicide, permettant ainsi d'accélérer le traitement avec un abattement important, mais aussi de faire stabiliser le résultat par une irradiation de protection, par exemple une fois par jour.

De plus, cette solution à l'avantage de proposer la stérilisation du contenu et du contenant à chaque cycle, tout autant que de travailler dans des matériaux nobles comme le verre trempé ou le quartz (tous deux transparents aux UV-A).

Le fait d'utiliser des diodes électroluminescentes 20 permet d'atteindre environ 50% de rendement lumineux (soit une consommation de 12Wh environ par litre traité) et de ne pas s'occuper de changement de lampe annuel, les durées de vie des diodes électroluminescentes 20 sont de l'ordre de 50 000 heures et elles supportent les cycles d'allumage répétitifs sans souffrir, il n'y à donc aucun consommable à prévoir, ni aucun entretien particulier, la bouteille 11 étant stérilisé à chaque cycle.

Une des possibilités de réalisation d'un aspect de la divulgation non couvert par les revendications est l'utilisation d'une bouteille en verre borosilicate, trempé et l'usage d'une boite s'ouvrant par le milieu. On peut disposer plusieurs rangées de diodes électroluminescentes 20 (quatre sur la mise en œuvre de la figure 1, mais on peut prévoir 6 ou 8 barrettes 21) avec des espacements angulaires préférentiellement réguliers, préférentiellement disposées afin que le globe supérieur de chaque diodes électroluminescentes 20 soit en contact avec l'extérieur du verre, lui servant ainsi de support sur les rangées basses.

Cette disposition innovante est préférentielle car elle permet, sans perte de puissance, d'aller atteindre avec le faisceau UV-A le milieu du contenant, permettant ainsi une désinfection bien repartie.

Mais elle possède d'autres avantages : le corps de la bouteille (soit le verre et l'eau) vont ainsi servir de stock tampon de chaleur (50% minimum de chaleur à évacuer), le verre se chargeant de refroidir l'ensemble des diodes électroluminescentes 20 avec un simple ventilateur latéral (les moyens de ventilation 50). Le rendement des diodes électroluminescentes 20 sera en conséquence important, et leur durée de vie préservée.

Mais, cette disposition permet aussi de traiter le contenu de la bouteille par la pasteurisation. En effet, en stoppant le ventilateur latéral, la perte de rendement des diodes électroluminescentes 20 va être utilisée pour atteindre une température de 60°C, qui en l'absence de chlore dans l'eau d'entrée permettra de garantir l'élimination totale des virus et bactéries. Il faudra bien sûr, pour cette option, adapter les puissances et rendement des diodes électroluminescentes 20 pour favoriser la montée en température. On peut prévoir un boîtier isolant de la chaleur pour limiter les pertes vers l'extérieur, et/ou des moyens de recirculation (un volet donnant sur l'extérieur) pour permettre un fonctionnement en circuit fermé ou ouvert.

On peut aussi prévoir un écran réfléchissant les UV-A (entre le corps du boîtier et les diodes électroluminescentes 20 + la bouteille 11), pour concentrer l'exposition aux UV-A sur l'eau 15.

Une autre réalisation est de fabriquer un plateau bardé de diodes électroluminescentes, au format d'une carafe en verre trempé, et poser la carafe par-dessus pendant le traitement. En effet, l'eau possède une capacité naturelle à se comporter comme une fibre optique, en permettant à la lumière de suivre son trajet. Selon cette mise en œuvre, il est apparaît que seul le rayonnement ultraviolet permet de faire disparaître le goût chloré de l'eau, il n'y a pas de filtre, pas de circulation d'ozone, pas de photocatalyseur.

Une réalisation de machine plus importante peut être fabriquée, connectée au réseau, avec simple, ou double réservoir pour permettre un fonctionnement ininterrompu. Il n'y en fait pas de limite de taille, car on peut utiliser aussi des pastiques alimentaires transparents aux UV-A (par exemple Polyméthacrylate de méthyle (PMMA), Polyéthylène haute densité (HDPE), Polytéréphtalate d'éthylène (PET)...). On peut ainsi fabriquer des bornes pour les villes, ou des réservoirs sous évier.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un boîtier en deux parties longitudinales, mais on peut prévoir un boîtier qui s'ouvre sur une extrémité pour glisser la bouteille 11 dans une chambre de traitement cylindrique.

De plus, l'appareil peut tout aussi bien être posé horizontal ou vertical pour traiter l'eau 15.

## Revendications

1. Procédé de traitement d'eau (15) chlorée à consommer par un utilisateur, comprenant une étape consistant à exposer un volume fermé prédéterminé d'eau (15) chlorée uniquement à un rayonnement ultraviolet d'une longueur d'onde comprise dans un intervalle allant de 320 nm à 400 nm et préférentiellement de 325 nm à 395 nm,
dans lequel l'étape d'exposition de volume prédéterminé au rayonnement ultraviolet est effectuée suffisamment longtemps pour fournir au moins 5.5Wh d'énergie lumineuse par litre d'eau (15) à traiter,
le volume fermé étant dépourvu de photo-catalyseur et le procédé étant exempt d'étape de filtration.

2. Procédé selon la revendication précédente, comprenant une étape consistant à chauffer le volume prédéterminé d'eau (15) à une température au moins égale à 60°C, simultanément à l'étape d'exposition du volume prédéterminé d'eau (15) chlorée au rayonnement ultraviolet.

## Patentansprüche

1. Verfahren zur Behandlung von chloriertem Wasser (15), das von einem Benutzer zu konsumieren ist, umfassend einen Schritt, der darin besteht, ein vorbestimmtes geschlossenes Volumen chlorierten Wassers (15) ausschließlich einer ultravioletten Strahlung mit einer Wellenlänge in einem Bereich von 320 nm bis 400 nm und vorzugsweise von 325 nm bis 395 nm auszusetzen,
wobei der Schritt des Aussetzens des vorbestimmten Volumens der ultravioletten Strahlung ausreichend lange durchgeführt wird, um mindestens 5.5Wh Lichtenergie pro Liter zu behandelndem Wasser (15) bereitzustellen,
wobei das geschlossene Volumen frei von Photokatalysator ist und das Verfahren keinen Filtrationsschritt umfasst.

2. Verfahren nach dem vorhergehenden Anspruch, umfassend einen Schritt, der darin besteht, das vorbestimmte Wasservolumen (15) auf eine Temperatur von mindestens 60°C zu erwärmen, gleichzeitig mit dem Schritt des Aussetzens des vorbestimmten Volumens chlorierten Wassers (15) der ultravioletten Strahlung.

## Claims

1. Method for treating chlorinated water (15) to be consumed by a user, comprising a step consisting of exposing a predetermined closed volume of chlorinated water (15) only to ultraviolet radiation having a wavelength in a range from 320 nm to 400 nm and preferably from 325 nm to 395 nm,
wherein the step of exposing the predetermined volume to the ultraviolet radiation is carried out sufficiently long to supply at least 5.5Wh of light energy per litre of water (15) to be treated, the closed volume being devoid of photo-catalyst and the method being free of a filtration step.

2. Method according to the preceding claim, comprising a step consisting of heating the predetermined volume of water (15) to a temperature at least equal to 60°C, simultaneously with the step of exposing the predetermined volume of chlorinated water (15) to the ultraviolet radiation.
